# EUROPEAN PATENT SPECIFICATION

(11) **EP 3 215 795 B1**
(45) Date of publication and mention of the grant of the patent: **21.08.2019**
(21) Application number: 14838901.8
(22) Date of filing: 06.11.2014
(51) Int. Cl.: F24S 10/40, F24S 40/52

(54) **SOLAR COLLECTOR COMPRISING A PLURALITY OF EVACUATED TUBES**
VAKUUMRÖHRENSONNENKOLLEKTOR MIT VERBESSERTER BETÄTIGUNG DER VERGLASUNG
CAPTEUR SOLAIRE À TUBES SOUS VIDE À ACTIONNEMENT AMÉLIORÉ DES PLAQUES-ÉCRAN

(43) Date of publication of application: 13.09.2017
(73) Proprietor: Pleion S.r.l., 37053 Cerea (Verona) (IT)
(72) Inventor: DEL FABRO, Michele, I-37053 Cerea (Verona) (IT); SCARRONE, Andrea, I-37053 Cerea (Verona) (IT)
(74) Representative: Mitola, Marco
(86) International application number: PCT/IT2014/000289
(87) International publication number: WO 2016/071931

(56) References cited:
- WO-A1-2011/014080
- WO-A1-2011/147001
- WO-A2-2012/137149
- US-A1- 2010 307 478
- US-A1- 2013 025 587

## Description

### FIELD OF APPLICATION

The present invention relates to an evacuated tube solar collector provided with an improved actuation of the glazing sheets.

### BACKGROUND ART

As is known, evacuated tube solar collectors comprise a plurality of evacuated tubes that produce thermal energy (for example working with a Sydney system or a Heat-Pipe system), thanks to the solar radiation of said tubes and use it, for example, for the production of hot water.

Such collectors are also provided with a system of glazing sheets, which rotate about the evacuated tubes offering the possibility to stop the production of thermal energy by the solar collector when high temperatures are reached in the system, causing the phenomenon called stagnation.

The sheets are rather extended, since they run through the tubes by the entire length or longitudinal extension thereof and are shaped as cylindrical sectors, i.e. are counter-shaped in relation to the cylindrical side wall of the evacuated tubes, so as to be arranged at a close distance from said wall and be able to rotate thereabout to switch from the active or upper configuration, in which they prevent the irradiation of the tubes by screening the sun rays, to an inactive or lower configuration, in which they must allow the irradiation of the tubes trying to not influence it in any way so as not to reduce the energy efficiency of the solar collector.

Said glazing sheets are rather complex to design since it is necessary to ensure an adequate mechanical resistance of the same which, in addition to being subjected to weather and heating by the sun rays, are also subjected to the direct action of the wind. In fact, the collectors are placed on the roofs of building structures. The action of the wind can also be very severe if we consider that the sheets can reach and exceed two meters in length and that, due to their shape, they may produce a dangerous sail effect.

Furthermore, the sheets must be rotated even repeatedly during the day according to the actual irradiation and consequent heating of the evacuated tubes; the action of moving the sheets can be burdensome from the point of view of mechanics, since it can be accompanied by the action of the wind and/or by dirt, dust and the like, which can make them hard to rotate.

For all these reasons, the prior art solutions provide for the implementation of sheets supported at both ends of the corresponding tubes so as to have a robust mechanical support of the sheets themselves.

Moreover, at one of said support ends, the known solutions provide for the implementation of a frame provided with driving means and related gear trains.

The driving means move the gears integral to actuating ends of the sheets, which can thus rotate about the tubes. The ends of the tubes opposite to the driving means and thus to the actuating end, are in turn supported by braces or supports specifically to the structure or frame of the solar collector. In this way, an adequate mechanical strength is ensured to the support/movement mechanism of the glazing sheets.

Therefore, the problem of moving the sheets and of their adequate mechanical support due to the weight, to the length of the sheets and to the action of the wind, is solved by using quite robust and oversized support/movement structures.

However, such known solutions have some drawbacks since they are mechanically complex, heavy and therefore also expensive.

Moreover, the implementation of oversized and bulky frames, in addition to excessively adding weight to the solar collector, tends to create shadow zones that inevitably affect, at least partially, the thermal efficiency of the collector itself; in other words, the fixed structures of the collector make partial shade on the evacuated tubes, thus limiting the solar radiation thereof and reducing the energy efficiency thereof when they, following the positioning of the glazing sheets in the inactive position, should receive the maximum possible radiation.

In summary, the prior art solutions are heavy, bulky and expensive and, in certain circumstances, have reduced energy efficiency. An embodiment of such solutions is disclosed for example by WO2012/137149A2.

### DISCLOSURE OF THE INVENTION

The problem of the present invention is to provide an evacuated tube solar collector which solves the drawbacks mentioned with reference to the known art.

In other words, the object of the present invention is to provide an evacuated tube solar collector with glazing sheets which is light and cost-effective on the one hand, while ensuring mechanical strength and energy efficiency on the other.

Such an object is achieved by a solar collector according to claim 1.

Other embodiments of the solar collector according to the invention are described in the subsequent claims.

### DESCRIPTION OF THE FIGURES

Further features and advantages of the present invention will appear more clearly from the following description of a preferred non-limiting embodiment thereof, in which:

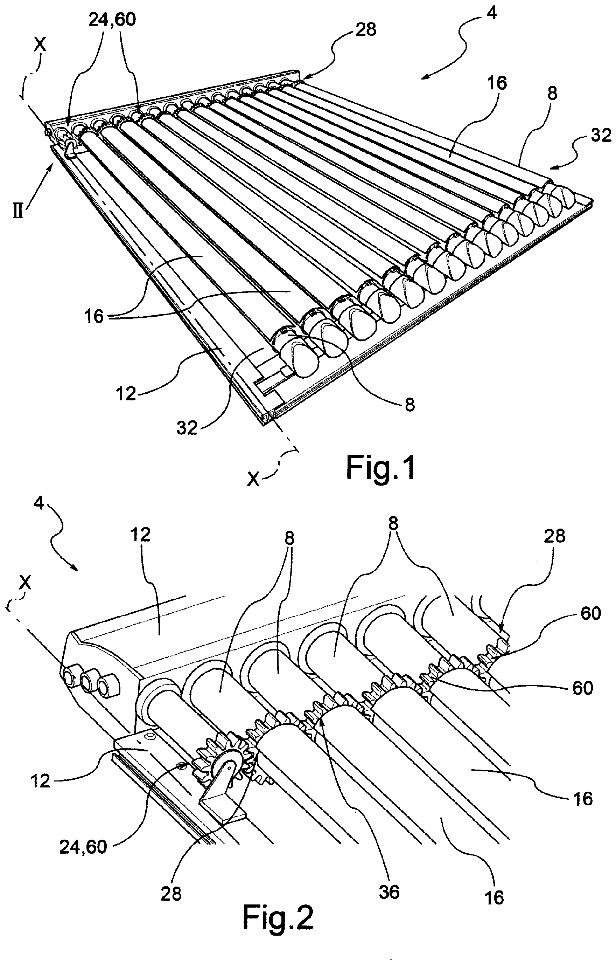

figure 1 shows a perspective view of a solar collector according to an embodiment of the present invention;
figure 2 shows a view of the enlarged detail II in figure 1;

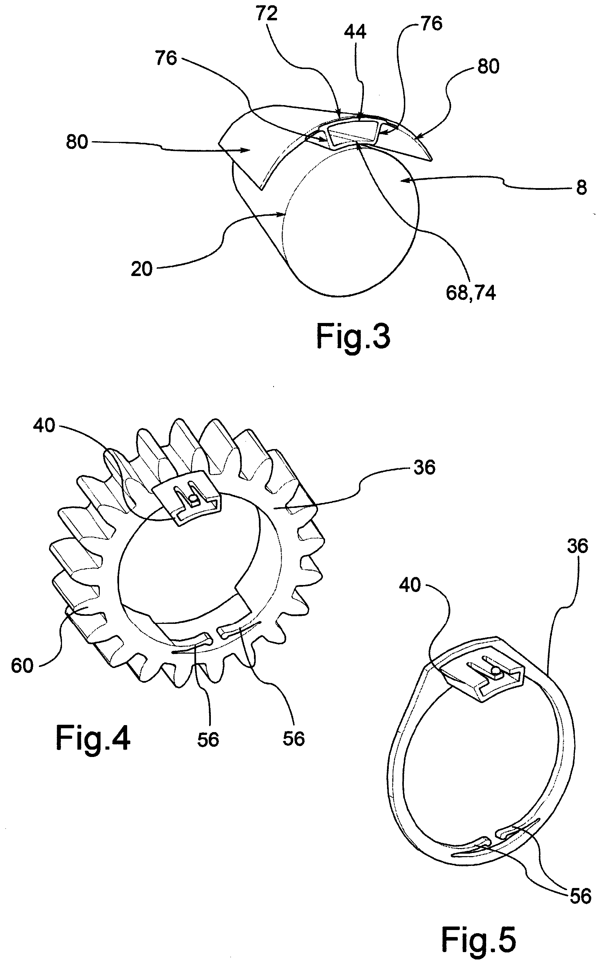

figures 3-5 show a perspective view of details of the solar collector according to the present invention.

### DETAILED DESCRIPTION

With reference to the above figures, reference numeral 4 generally indicates an evacuated tube solar collector comprising a plurality of evacuated tubes 8 that produce thermal energy; for example, the solar collector can be of the type operating with Sydney system or with Heat-Pipe system so as to produce thermal energy, to be stored for example as hot water, thanks to the solar radiation of said tubes 8.

For the purposes of the protection scope of the present invention, however, the specific type of collector and/or the operation of the tubes are not relevant and the following description should be only used for the purpose of description of a possible embodiment, and not to limit the actual possibilities of application of the invention itself.

The solar collector 4 includes a plurality of evacuated tubes 8 for the production of thermal energy, in which tubes 8 are arranged parallel to a main longitudinal direction X-X. The tubes are preferably cylindrical and axially symmetric with respect to symmetry axes parallel to said main longitudinal direction X-X.

The solar collector 4 also includes a support frame 12 for said tubes 8.

The support frame 12 can have any shape and size, and be made of any material; such details are not relevant for the purposes of the present invention.

The solar collector 4 includes a plurality of glazing sheets 16, each associated with a tube 8 and adapted to cover an outer side wall 20 of said tube 8 to prevent the solar irradiation thereof, the glazing sheets 16 being at least partially counter-shaped in relation to the outer side wall 20 of tube 8.

The purpose of the glazing sheets 16 is to control the maximum temperature reached in the tubes so that, in case of excessive solar radiation, the production of thermal energy by the solar collector 4 is inhibited, thus causing the phenomenon called stagnation.

The solar collector 4 also comprises movement means 24 of said glazing sheets 16 so as to selectively move the glazing sheets 16 from an active configuration, in which the glazing sheets 16 overlap the outer side wall 20 of tubes 8 to prevent the irradiation thereof, to a passive configuration, in which the glazing sheets 16 are arranged in diametrically opposite position to the active configuration, so as to promote or otherwise not impede the irradiation of the same tubes 8.

The glazing sheets 16 comprise a movement and support end 28 keyed coaxially to a relative tube 8, said movement and support end 28 being mechanically connected to the actuating means 24 to allow the rotation of the sheet itself, so as to switch from the active configuration to the passive one, and vice versa.

The movement means 24 may comprise electric motors and relative transmission means, such as gear trains, belts, chains, as better described hereafter.

The glazing sheet 16 is mechanically supported by tube 8 and is arranged overall cantilevered with respect to the movement and support end 28 thereof.

In other words, tube 8 constitutes the mechanical support of the glazing sheet 16, since said sheet is mounted coaxially to tube 8 which acts as a pivot and a mechanical support for the sheet itself.

The glazing sheet 16 comprises a free end 32, opposite to the movement and support end 28, with respect to the main longitudinal direction X-X, and free of mechanical connections to tube 8 or to the support frame 12, so that the glazing sheet 16 is arranged overall cantilevered with respect to the movement and support end 28 thereof.

According to one embodiment, the glazing sheet 16 comprises a ring 36 provided with a protuberance 40 which engages with a relative engagement seat 44 at the movement and support end 28 of the glazing sheet 16, said ring 36 being arranged coaxially to tube 8.

Preferably, the engagement between protuberance 40 and the engagement seat 44 is of the snap type with shape coupling.

According to one embodiment, protuberance 40 and the engagement seat 44 are shaped with a substantially trapezoidal section.

According to one embodiment, ring 36 comprises at least one spring tab 56 abutting against the outer side wall 20 of tube 8.

For example, the spring tab 56 is arranged in a position diametrically opposite to protuberance 40 which engages in the relative engagement seat 44 of the glazing sheet 16.

According to one embodiment, the spring tab 56 comprises at least one pair of spring tabs 56 which mutually cooperate in abutment against the outer side wall 20 of tube 8.

According to one embodiment, ring 36 forms a sliding coupling with the outer side wall 20 of tube 16. In this way, tube 8 acts as a pivot and support for ring 36 and therefore for the glazing sheet 16.

For example, the movement means 24 include a gears 60 integral in rotation with said rings 36 of the glazing sheet 16.

For example, the movement means 24 comprise a gear train 60, each associated to a tube 8, so that gears 60 associated to two adjacent tubes 8 mutually engage to rotate the respective glazing sheets 16 in a synchronous manner.

According to the invention, at least one glazing sheet 16 has a rigid core 64 having a curved face 68, counter-shaped and directly facing the outer side wall 20 of tube 8 so as to rotate relative to tube 8 and rest against said outer side wall 20. In other words, under the action of the weight of the glazing sheet 16 and/or under the action of the wind, the glazing sheet can bend, coming into contact with the outer side wall 20 of tube 8: then, the curved face 68 rests against the outer side wall 20 of tube 8, and thanks to the fact that it is counter-shaped relative to the cylindrical shape of tube 8, it still allows the rotation of the glazing sheet 16 with respect to tube 8.

According to one embodiment, the rigid core 64 comprises the engagement seat 44 which mechanically couples with protuberance 40 of ring 36 so as to allow the transmission of the rotary motion to the glazing sheet 16.

Preferably, the rigid core 64 has a substantially trapezoidal hollow section in which the major and minor bases 72, 74 of said trapezium are curved and counter-shaped in relation to the outer side wall 20 of tube 8 and the side walls 76 of the trapezium are substantially perpendicular with respect to said bases 72, 74.

Preferably, the rigid core 64 of the glazing sheet 16 is dimensioned so as to have an own resonance frequency greater than or equal to that of the wind that normally acts on the solar collectors; for example, the rigid core 64 of the glazing sheet 16 is dimensioned so as to have a resonance frequency greater than or equal to 4-5 Hz, typical of gusts of wind, for example in Italy.

According to one embodiment, said rigid core 64 is associated with at least one side wing 80, arranged parallel to the rigid core 64, i.e. parallel to the main longitudinal direction X-X, and cantilevered with respect to the latter.

The side wing 80 is flexible so as to deform elastically under the action of the wind.

Preferably, the glazing sheet 16 comprises a rigid core 64 and a pair of flexible side wings 80, arranged symmetrically on opposite sides of the rigid core 64.

Said flexible side wings 80 are preferably counter-shaped in relation to the outer side wall 20 of tube 8.

For example, the rigid core 64 is made of rigid PVC and the flexible side wings 80 are made of soft PVC; it is clear that for the purposes of the present invention, it is possible to use several different materials.

As can be appreciated from the description, the solar collector of the present invention allows overcoming the drawbacks of the prior art solar collectors.

In particular, the solar collector according to the invention is lighter and more cost-effective than the collectors of the prior art.

Nevertheless, the collector of the present invention is mechanically resistant and reliable since it is able to withstand wind loads without problems while not having the complex and resistant frames of the known solutions.

In fact, unlike the known solutions which provide double support structures at the opposite longitudinal ends of the sheets, the glazing sheets of the solar collector of the present invention are at least partially supported by the evacuated tubes. In fact, the connecting end of the glazing sheets is keyed coaxially to the tubes so as to be supported thereby; the tube thus acts as a support and pivot for the connecting end of the sheets and thus for the sheet itself.

Furthermore, the sheet according to the present invention comprises a core counter-shaped in relation to the outer side wall of the tube so as to constitute an additional support for the portion of glazing sheet arranged cantilevered with respect to the connecting end.

Moreover, unlike the known solutions which provide for hyperstatic locking, the sheets of the present invention are shaped so as to be able to deform elastically under the action of the wind.

Moreover, because of the deformable structure of the sheets, it is possible to significantly reduce the dynamic loads of the wind on the sheets and thus also the dynamic loads of the wind on the glass tubes.

In fact, the sheet ends are made of soft material, such as soft PVC, which bends under the load of the wind, reducing the sail effect and consequently the aerodynamic coefficient.

In addition, the special shape of the glazing sheets and their supports allows maximising the portion of the tube exposed to light, minimising the effects of shading on the tube, when the collector must "operate" and the glazing sheets are positioned below the tube.

Moreover, to further reduce the problems due to the dynamic action of the wind, a particular mounting ring and a particular movement gear have been devised: thanks to the spring tabs, it is therefore possible to reduce all the possible vibrations of the sheets on the tube.

Also the inner rigid core of the glazing sheets is advantageously dimensioned so as to have a resonance frequency well above that exciting due to the wind. For example, the rigid core is designed to have a frequency higher than that of gusts of wind which normally do not exceed the frequency of 4-5 Hz: in this way, the risk of occurrence of instability or resonance phenomena which could make the sheets break is prevented.

All of these features allow safely using the glazing sheets operated and supported by structures lighter and less bulky than those of the prior art.

Furthermore, for safety purposes, the sheets are made of several parts, for example of two or three parts on the length of the single tube to be coated so that, in case of breakage, an extremely small and lightweight structure can fall from the collector which, partly also due to its shape, would have a slow fall, minimising any damage to third parties.

A man skilled in the art may make several changes and adjustments to the solar collectors described above in order to meet specific and incidental needs, all falling within the scope of protection defined in the following claims.

## Claims

1. A solar collector (1) comprising
- a plurality of evacuated tubes (8) for the production of thermal energy, the tubes (8) being arranged parallel to a main longitudinal direction (X-X),
- a support frame (12) for said tubes (8),
- a plurality of glazing sheets (16), each associated with a tube (8) and adapted to cover an outer side wall (20) of said tube (8) to prevent the solar irradiation thereof, the glazing sheets (16) being at least partially counter-shaped in relation to said outer side wall (20) of the tube (8),
- movement means (24) of said glazing sheets (16) so as to selectively move the glazing sheets (16) from an active configuration, in which the glazing sheets (16) overlap the outer side wall (20) of the tubes (8) to prevent the irradiation thereof, to a passive configuration, in which the glazing sheets (16) are arranged in diametrically opposite position to the active configuration, so as to promote the irradiation of the tubes (8),
wherein
- the glazing sheets (16) comprise a movement and support end (28) keyed coaxially to a relative tube (8), the movement and support end (28) being mechanically connected to the actuating means (24) to allow the rotation of the glazing sheets (16),
- wherein each of the glazing sheets (16) is mounted coaxially to a relative tube (8),
**characterised in that**
- each of the glazing sheets (16) is mechanically supported by a relative tube (8) and is arranged overall cantilevered with respect to the movement and support end (28) thereof, wherein the relative tube (8) constitutes the mechanical support of a relative glazing sheet (16),
wherein the relative tube (8) acts as a pivot and a mechanical support for the sheet itself, and wherein each of the glazing sheets (16) has a rigid core (64) having a curved face (68), counter-shaped and directly facing the outer side wall (20) of the relative tube (8) so as to rotate relative to the tube (8) and rest against said outer side wall (20).

2. A solar collector (4) according to claim 1, wherein each of the glazing sheets (16) comprises a free end (32), opposite to the movement and support end (28), with respect to the main longitudinal direction (X-X), and free of mechanical connections to the tube (8) or to the frame (12), so that the glazing sheet (16) is arranged overall cantilevered with respect to the movement and support end (28) thereof.

3. A solar collector (4) according to claim 1 or 2, wherein each of the glazing sheets (16) comprises a ring (36) provided with a protuberance (40) which engages with a relative engagement seat (44) at the movement and support end (28) of the glazing sheet (16), said ring (36) being arranged coaxially to the tube (8).

4. A solar collector (4) according to claim 3, wherein the engagement between the protuberance (40) and the engagement seat (44) is of the snap type with shape coupling.

5. A solar collector (4) according to any one of claims 3 to 4, wherein the protuberance (40) and the engagement seat (44) are shaped with a substantially trapezoidal section.

6. A solar collector (4) according to any one of claims 3 to 5, wherein the ring (36) comprises at least one spring tab (56) abutting against the outer side wall (20) of the tube (8), wherein said spring tab (56) is arranged in a position diametrically opposite to the protuberance (40) which engages in the relative engagement seat (44) of the glazing sheet (16).

7. A solar collector (4) according to any one of claims 3 to 6, wherein the ring (36) forms a sliding coupling with the outer side wall (20) of the tube (8).

8. A solar collector (4) according to any one of claims 3 to 7, wherein the movement means (24) comprise gears (60) integral in rotation with said rings (36) of the glazing sheets (16).

9. A solar collector (4) according to claim 8, wherein the movement means (24) comprise a gear train (60) and/or belts, so as to rotate the glazing sheets (16) adjacent to each other in a synchronous manner.

10. A solar collector (4) according to any one of previous claims, wherein the rigid core (64) comprises the engagement seat (44) which mechanically couples with the protuberance (40) of the ring (36) so as to allow the transmission of the rotary motion to the glazing sheet (16).

11. A solar collector (4) according to any one of previous claims, wherein the rigid core (64) has a substantially trapezoidal hollow section in which the major and minor bases (72, 74) of said trapezium are curved and counter-shaped in relation to the outer side wall (20) of the tube (8) and the side walls (76) of the trapezium are substantially perpendicular with respect to said bases (72, 74).

12. A solar collector (4) according to any one of previous claims, wherein the rigid core (64) is dimensioned so as to have a resonance frequency higher than or equal to 4Hz.

13. A solar collector (4) according to any one of previous claims, wherein said rigid core (64) is associated to at least one side wing (80), arranged parallel to the rigid core (64) and cantilevered with respect to the latter.

14. A solar collector (4) according to claim 13, wherein said side wing (80) is flexible so as to deform elastically under the action of the wind.

15. A solar collector (4) according to any one of previous claims, wherein each of the glazing sheets (16) further comprises a pair of flexible side wings (80), arranged symmetrically on opposite sides of the rigid core (64), wherein said flexible side wings (80) are counter-shaped in relation to the outer side wall (20) of the tube (8).

## Patentansprüche

1. Solarkollektor (1), umfassend
- eine Mehrzahl von Vakuumrohren (8) für die Erzeugung thermischer Energie, wobei die Rohre (8) parallel zu einer Hauptlängsrichtung (X-X) angeordnet sind,
- einen Halterungsrahmen (12) für die Rohre (8),
- eine Mehrzahl von Verglasungsplatten (16), von welchen jede einem Rohr (8) zugeordnet ist und dazu eingerichtet ist, eine äußere Seitenwand (20) des Rohrs (8) abzudecken, um die Solarbestrahlung davon zu verhindern, wobei die Verglasungsplatten (16) in Bezug auf die äußere Seitenwand (20) des Rohrs (8) wenigstens teilweise gegengeformt sind,
- Bewegungsmittel (24) der Verglasungsplatten (16), um die Verglasungsplatten (16) selektiv von einer aktiven Konfiguration, in welcher die Verglasungsplatten (16) die äußere Seitenwand (20) der Rohre (8) überlappen, um die Bestrahlung davon zu verhindern, zu einer passiven Konfiguration zu bewegen, in welcher die Verglasungsplatten (16) in einer diametral entgegengesetzten Position zu der aktiven Konfiguration angeordnet sind, um die Bestrahlung der Rohre (8) zu begünstigen,
wobei
- die Verglasungsplatten (16) ein Bewegungs- und Halterungsende (28) umfassen, welches koaxial zu einem jeweiligen Rohr (8) verkeilt ist, wobei das Bewegungs- und Halterungsende (28) mechanisch mit den Betätigungsmitteln (24) verbunden ist, um die Drehung der Verglasungsplatten (16) zu ermöglichen,
- wobei jede der Verglasungsplatten (16) koaxial an einem jeweiligen Rohr (8) montiert ist,
**dadurch gekennzeichnet, dass**
- jede der Verglasungsplatten (16) durch ein jeweiliges Rohr (8) mechanisch gehaltert ist und hinsichtlich des Bewegungs- und Halterungsendes (28) davon gesamtheitlich freitragend ist, wobei das jeweilige Rohr (8) die mechanische Halterung einer jeweiligen Verglasungsplatte (16) ausmacht, wobei das jeweilige Rohr (8) als ein Gelenk und eine mechanische Halterung für die Platte selbst wirkt und wobei jede der Verglasungsplatten (16) einen starren Kern (64) mit einer gekrümmten Fläche (68) aufweist, welche gegengeformt und der äußeren Seitenwand (20) des jeweiligen Rohrs (8) direkt zugewandt ist, um sich bezüglich des Rohrs (8) zu drehen und an der äußeren Seitenwand (20) anzuliegen.

2. Solarkollektor (4) nach Anspruch 1, wobei jede der Verglasungsplatten (16) ein freies Ende (32) umfasst, welches dem Bewegungs- und Halterungsende (28) hinsichtlich der Hauptlängsrichtung (X-X) entgegengesetzt ist und frei von mechanischen Verbindungen mit dem Rohr (8) oder mit dem Rahmen (12) ist, so dass die Verglasungsplatte (16) hinsichtlich des Bewegungs- und Halterungsendes (28) davon gesamtheitlich freitragend angeordnet ist.

3. Solarkollektor (4) nach Anspruch 1 oder 2, wobei jede der Verglasungsplatten (16) einen Ring (36) umfasst, welcher mit einem Vorsprung (40) bereitgestellt ist, der an dem Bewegungs- und Halterungsende (28) der Verglasungsplatte (16) mit einem jeweiligen Eingriffssitz (44) eingreift, wobei der Ring (36) koaxial zu dem Rohr (8) angeordnet ist.

4. Solarkollektor (4) nach Anspruch 3, wobei der Eingriff zwischen dem Vorsprung (40) und dem Eingriffssitz (44) vom Schnapp-Typ mit einer formschlüssigen Verbindung ist.

5. Solarkollektor (4) nach einem der Ansprüche 3 bis 4, wobei der Vorsprung (40) und der Eingriffssitz (44) mit einem im Wesentlichen trapezförmigen Abschnitt gebildet sind.

6. Solarkollektor (4) nach einem der Ansprüche 3 bis 5, wobei der Ring (36) wenigstens eine Federlasche (56) umfasst, welche an der äußeren Seitenwand (20) des Rohrs (8) anliegt, wobei die Federlasche (56) in einer Position angeordnet ist, welche dem Vorsprung (40) diametral entgegengesetzt ist, welcher in den jeweiligen Eingriffssitz (44) der Verglasungsplatte (16) eingreift.

7. Solarkollektor (4) nach einem der Ansprüche 3 bis 6, wobei der Ring (36) eine Rutschkupplung mit der äußeren Seitenwand (20) des Rohrs (8) bildet.

8. Solarkollektor (4) nach einem der Ansprüche 3 bis 7, wobei die Bewegungsmittel (24) Zahnräder (60) umfassen, welche drehfest zu den Ringen (36) der Verglasungsplatten (16) sind.

9. Solarkollektor (4) nach Anspruch 8, wobei die Bewegungsmittel (24) Zahnradgetriebe (60) und/oder Riemen umfassen, um die zueinander benachbarten Verglasungsplatten (16) in einer synchronen Weise zu drehen.

10. Solarkollektor (4) nach einem der vorhergehenden Ansprüche, wobei der starre Kern (64) den Eingriffssitz (44) umfasst, welcher mechanisch mit dem Vorsprung (40) des Rings (36) gekoppelt ist, um die Übertragung der Drehbewegung auf die Verglasungsplatte (16) zu ermöglichen.

11. Solarkollektor (4) nach einem der vorhergehenden Ansprüche, wobei der starre Kern (64) einen im Wesentlichen trapezförmigen, hohlen Abschnitt aufweist, bei welchem die größere und die kleinere Basis (72, 74) des Trapezes in Bezug auf die äußere Seitenwand (20) des Rohrs (8) gekrümmt und gegengeformt sind und die Seitenwände (76) des Trapezes hinsichtlich der Basen (72, 74) im Wesentlichen senkrecht sind.

12. Solarkollektor (4) nach einem der vorhergehenden Ansprüche, wobei der starre Kern (64) derart dimensioniert ist, dass er eine Resonanzfrequenz aufweist, welche höher als oder gleich 4 Hz ist.

13. Solarkollektor (4) nach einem der vorhergehenden Ansprüche, wobei der starre Kern (64) wenigstens einem Seitenflügel (80) zugeordnet ist, welcher parallel zu dem starren Kern (64) und hinsichtlich des Letzteren freitragend angeordnet ist.

14. Solarkollektor (4) nach Anspruch 13, wobei der Seitenflügel (80) derart flexibel ist, dass er sich unter der Wirkung des Windes elastisch verformt.

15. Solarkollektor (4) nach einem der vorhergehenden Ansprüche, wobei jede der Verglasungsplatten (16) ferner ein Paar flexibler Seitenflügel (80) umfasst, welche symmetrisch an entgegengesetzten Seiten des starren Kerns (64) angeordnet sind, wobei die flexiblen Seitenflügel (80) in Bezug auf die äußere Seitenwand (20) des Rohrs (8) gegengeformt sind.

## Revendications

1. Capteur solaire (1) comprenant
- une pluralité de tubes sous vide (8) pour la production d'énergie thermique, les tubes (8) étant agencés parallèlement à une direction longitudinale principale (X-X),
- un cadre de support (12) pour lesdits tubes (8),
- une pluralité de plaques-écran (16), chacune associée à un tube (8) et conçue pour recouvrir une paroi latérale externe (20) dudit tube (8) pour empêcher son irradiation solaire, les plaques-écran (16) étant au moins partiellement en contre-forme par rapport à ladite paroi latérale externe (20) du tube (8),
- des moyens de déplacement (24) desdites plaques-écran (16) afin de déplacer sélectivement les plaques-écran (16) d'une configuration active, dans laquelle les plaques-écran (16) recouvrent la paroi latérale externe (20) des tubes (8) pour empêcher leur irradiation, à une configuration passive, dans laquelle les plaques-écran (16) sont agencées dans une position diamétralement opposée à la configuration active, afin de favoriser l'irradiation des tubes (8),
dans lequel
- les plaques-écran (16) comprennent une extrémité de déplacement et de support (28) verrouillée de manière coaxiale sur un tube associé (8), l'extrémité de déplacement et de support (28) étant mécaniquement reliée aux moyens d'actionnement (24) pour permettre la rotation des plaques-écran (16),
- dans lequel chacune des plaques-écran (16) est montée de manière coaxiale sur un tube associé (8),
**caractérisé en ce que**
- chacune des plaques-écran (16) est mécaniquement portée par un tube associé (8) et est agencée globalement en porte-à-faux par rapport à son extrémité de déplacement et de support (28), dans lequel le tube associé (8) constitue le support mécanique d'une plaque-écran associée (16), dans lequel le tube associé (8) agit comme un pivot et un support mécanique pour la plaque elle-même, et dans lequel chacune des plaques-écran (16) possède une âme rigide (64) ayant une face incurvée (68) en contre-forme et faisant directement face à la paroi latérale externe (20) du tube associé (8) afin de tourner par rapport au tube (8) et reposer contre ladite paroi latérale externe (20).

2. Capteur solaire (4) selon la revendication 1, dans lequel chacune des plaques-écran (16) comprend une extrémité libre (32), opposée à l'extrémité de déplacement et de support (28), par rapport à la direction longitudinale principale (X-X), et dépourvue de liaisons mécaniques avec le tube (8) ou avec le cadre (12), de sorte que la plaque-écran (16) est agencée globalement en porte à faux par rapport à son extrémité de déplacement et de support (28).

3. Capteur solaire (4) selon la revendication 1 ou 2, dans lequel chacune des plaques-écran (16) comprend une bague (36) munie d'une protubérance (40) qui vient en prise dans un siège de mise en prise associée (44) au niveau de l'extrémité de déplacement et de support (28) de la plaque-écran (16), ladite bague (36) étant agencée de manière coaxiale au tube (8).

4. Capteur solaire (4) selon la revendication 3, dans lequel la mise en prise entre la protubérance (40) et le siège de mise en prise (44) est du type à encliquetage avec couplage de forme.

5. Capteur solaire (4) selon l'une quelconque des revendications 3 à 4, dans lequel la protubérance (40) et le siège de mise en prise (44) ont une forme ayant une section sensiblement trapézoïdale.

6. Capteur solaire (4) selon l'une quelconque des revendications 3 à 5, dans lequel la bague (36) comprend au moins une lame à ressort (56) venant en butée contre la paroi latérale externe (20) du tube (8), dans lequel ladite lame à ressort (56) est agencée dans une position diamétralement opposée à la protubérance (40) qui vient en prise dans le siège de mise en prise associée (44) de la plaque-écran (16).

7. Capteur solaire (4) selon l'une quelconque des revendications 3 à 6, dans lequel la bague (36) forme un couplage coulissant avec la paroi latérale externe (20) du tube (8).

8. Capteur solaire (4) selon l'une quelconque des revendications 3 à 7, dans lequel les moyens de déplacement (24) comprennent des engrenages (60) solidaires en rotation avec lesdites bagues (36) des plaques-écran (16).

9. Capteur solaire (4) selon la revendication 8, dans lequel les moyens de déplacement (24) comprennent un train d'engrenages (60) et/ou des courroies, afin de faire tourner les plaques-écran (16) adjacentes les unes avec les autres d'une manière synchrone.

10. Capteur solaire (4) selon l'une quelconque des revendications précédentes, dans lequel l'âme rigide (64) comprend le siège de mise en prise (44) qui s'accouple mécaniquement avec la protubérance (40) de la bague (36) afin de permettre la transmission du mouvement de rotation à la plaque-écran (16).

11. Capteur solaire (4) selon l'une quelconque des revendications précédentes, dans lequel l'âme rigide (64) possède une section creuse sensiblement trapézoïdale dans laquelle les bases majeure et mineure (72, 74) dudit trapèze sont incurvées et en contre-forme par rapport à la paroi latérale externe (20) du tube (8) et les parois latérales (76) du trapèze sont sensiblement perpendiculaires par rapport auxdites bases (72, 74).

12. Capteur solaire (4) selon l'une quelconque des revendications précédentes, dans lequel l'âme rigide (64) est dimensionnée afin d'avoir une fréquence de résonance supérieure ou égale à 4 Hz.

13. Capteur solaire (4) selon l'une quelconque des revendications précédentes, dans lequel ladite âme rigide (64) est associée à au moins une aile latérale (80), agencée parallèlement à l'âme rigide (64) et en porte à faux par rapport à celle-ci.

14. Capteur solaire (4) selon la revendication 13, dans lequel ladite aile latérale (80) est souple afin de se déformer élastiquement sous l'action du vent.

15. Capteur solaire (4) selon l'une quelconque des revendications précédentes, dans lequel chacune des plaques-écran (16) comprend en outre une paire d'ailes latérales souples (80), agencées symétriquement sur des côtés opposés de l'âme rigide (64), dans lequel lesdites ailes latérales souples (80) sont en contre-forme par rapport à la paroi latérale externe (20) du tube (8).
